# EUROPEAN PATENT APPLICATION

(11) **EP 4 098 899 A1**
(43) Date of publication of application: **07.12.2022**
(21) Application number: 21764825.2
(22) Date of filing: 13.01.2021
(51) Int. Cl.: F16D 3/84, F16D 3/223

(54) **ROLLING BOOT FOR CONSTANT VELOCITY JOINT**

(30) Priority: 04.03.2020 KR 20200027226
(71) Applicant: ERAE AMS Co., Ltd., Dalseong-gun Daegu 42981 (KR)
(72) Inventor: LEE, Hyun Il, Dalseong-Gun Daegu 42981 (KR); NOH, Jung Su, Dalseong-Gun Daegu 42981 (KR); AHN, Nam Sik, Dalseong-Gun Daegu 42981 (KR)
(74) Representative: Manitz Finsterwald Patent- und Rechtsanwaltspartnerschaft mbB
(86) International application number: PCT/KR2021/000433
(87) International publication number: WO 2021/177590

(57) **Abstract**

A rolling boot used in a constant velocity joint includes: a first fastening portion that is configured to be fastened to a joint shaft of the constant velocity joint; a second fastening portion that is configured to be fastened to a joint case of the constant velocity joint; a first folding portion that is configured to be folded when the constant velocity joint is articulated; a second folding portion that is configured to be folded when the constant velocity joint is articulated and is disposed radially outside the first folding portion; a support portion that is configured to support tensile and compression when the first folding portion and the second folding portion are folded; a first peak connecting the first fooling portion and the second folding portion; and a second peak connecting the second folding portion and the support portion.

## Description

### [Technical Field]

The present invention relates a rolling boot that is used in a constant velocity joint for vehicles.

### [Background Art]

A rolling boot, also called a diaphragm boot, is installed to surround a constant velocity joint of a vehicle and is configured to have a function of storing grease for preventing the inflow of foreign substances during operation and a function of lubrication and cooling. The rolling boot includes first and second fastening portions respectively fastened to the joint case of the constant velocity joint and the shaft, and a folding portion provided between the first and second fastening portions, and since the joint case and the shaft are configured to undergo an axial relative movement and an articulation during operation of the constant velocity joint, the folding portion is configured to absorb axial relative movement and articulation.

Since the folding portion of the rolling boot is repeatedly subjected to tension and compression during operation, excessive shape deformation or stress concentration may occur in a specific portion of the folding part and thus durability may be deteriorated. In addition, since the folding portion of the conventional rolling boot is mainly composed of only a structure that is folded in the vertical direction, if it is bent larger than the allowable operating angle during excessive use and mounting, stress may be concentrated in the main folding region and damage may be caused.

### <Prior Art Document>

(Patent Document 1) Korean patent publication No. 10-2015-0125575 (2015.11.09.)
(Patent Document 2) Korean patent registration No. 10-1865190 (2018.05.31.)
(Patent Document 3) US patent No. US8,313,107 (2012.11.20.)
(Patent Document 4) US patent No. US9,494,199 (2016.11.15.)

### [Detailed Description of the Invention]

### [Technical Object]

The object to be solved by the present invention is to provide a rolling boot with improved reliability and durability by preventing excessive deformation through the dispersion of the tensile region during articulation.

### [Technical Solution]

A rolling boot used in a constant velocity joint according to an embodiment of the present invention includes: a first fastening portion that is configured to be fastened to a joint shaft of the constant velocity joint; a second fastening portion that is configured to be fastened to a joint case of the constant velocity joint; a first folding portion that is configured to be folded when the constant velocity joint is articulated; a second folding portion that is configured to be folded when the constant velocity joint is articulated and is disposed radially outside the first folding portion; a support portion that is configured to support tensile and compression when the first folding portion and the second folding portion are folded; a first peak connecting the first fooling portion and the second folding portion; and a second peak connecting the second folding portion and the support portion.

The first peak and the second peak may be respectively convexly formed toward the first fastening portion in a direction parallel to an axial direction of the joint shaft.

Tangent lines at apexes of the first peak and the second peak may be respectively perpendicular to an axial direction of the joint shaft.

A distance between a tip of the first fastening portion and an apex of the first peak may be less than or equal to a distance between a tip of the first fastening portion and an apex of the second peak.

A distance between an end of the second fastening portion and a bottom of the first folding portion may be greater than a distance between an end of the second fastening portion and a bottom of the second folding portion.

A portion connecting the first folding portion and the first peak may form an angle between 10 to 25 degrees with respect to an axial direction of the joint shaft.

A distance between a line parallel to an axial direction of the joint shaft while passing an apex of the first peak and an outer circumferential surface of the first fastening portion may be 20 to 50% of a distance between a line parallel to the axial direction of the joint shaft while passing a bottom of the second folding portion and an outer circumferential surface of the first fastening portion.

### [Effect of the Invention]

According to the present invention, the reliability and durability of the boot can be improved by providing two folding portions and support portions to prevent excessive shape deformation of the folding portion and distribute the load.

### [Brief Description of the Drawings]

FIG. 1 is a perspective view of a rolling boot according to an embodiment of the present invention.
FIG. 2 is a sectional view taken along a line I - I in FIG. 1.
FIG. 3 is a sectional view showing a shape in an articulated state of a rolling boot according to an embodiment of the present invention.

### [Best Mode of the Invention]

Embodiments of the present invention will be described hereinafter with reference to the accompanying drawings.

A rolling boot 10 according to an embodiment of the present invention is used for a constant velocity joint used in a drive system of a vehicle. The rolling boot 10 includes a first fastening portion 11 and a second fastening portion 13 configured to be respectively fastened to a joint shaft 201 and a joint case 203 of a constant velocity joint 200. For example, the constant velocity joint 200 may be a joint capable of an articulation and an axial displacement, the joint case 203 may be an outer race of the constant velocity joint 200 and the joint shaft 201 may be a shaft that is connected to an inner race of the constant velocity joint 200.

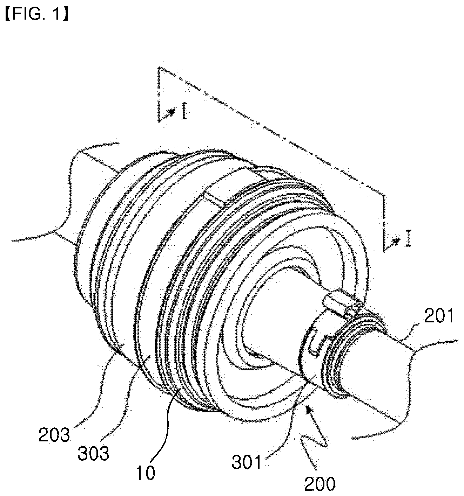

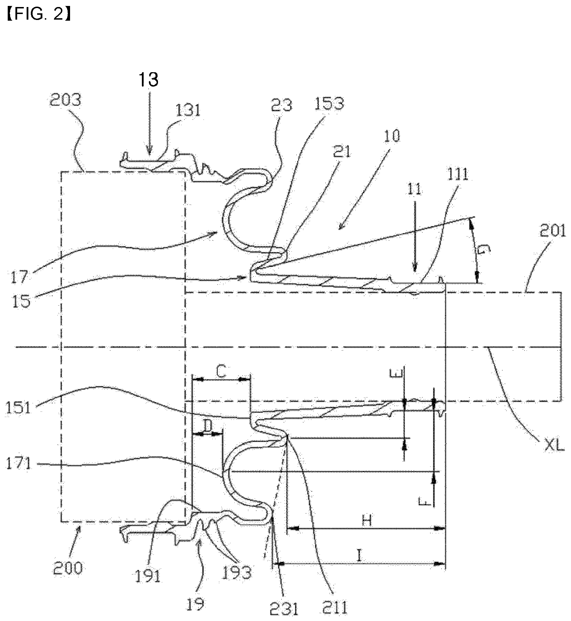

Referring to FIG. 1 and FIG. 2, the first coupling portion 11 and the second coupling portion 13 may respectively have a hollow cylindrical shape and may be coaxially arranged along the axial direction XL. The first fastening portion 11 and the second fastening portion 13 form fastening grooves 111 and 131, respectively, and clamping bands 301 and 303 are fastened to the fastening grooves 111 and 131, respectively, so that the fastening portions 11 and 13 may be respectively fastened to the joint shaft 201 and the joint case 203.

A first folding portion 15 and a second folding portion 17 each configured to be foldable when the constant velocity joint is articulated are provided. As shown in FIG. 2, the second folding portion 17 is disposed radially outside the first folding portion 15, and the first and second folding portions 15 and 17 may each have a ring shape and are arranged coaxially in an unfolded state, that is, in a state of FIG. 2.

A support portion 19 is configured to support tension and compression when the first folding portion 15 and the second folding portion 17 are folded. The support portion 19 may include a bottom portion 191 extending parallel to an axial direction XL and a plurality of flanges 193 protruding radially outward from the bottom portion 191.

Referring to FIG. 2, a first peak 21 connects the first folding portion 15 and the second folding portion 17, and a second peak 23 connects the second folding portion 17 and the supporting portion 19. The first and second peaks 21 and 23 may be respectively convexly formed toward the first fastening portion 11 in a direction parallel to the axial direction XL of the joint shaft 201. A tangent line at the apexes 211 and 231 in a direction parallel to the axial direction XL of the first and second peaks 21 and 23 may be perpendicular to the axial direction XL. According to an embodiment of the present invention, two folding portions 15 and 17 and two peaks 21 and 23 are provided.

According to the embodiment of the present invention, a distance H between the tip of the first fastening portion 11 and the apex 211 of the first peak 21 may be less than or equal to a distance I between a tip of the first fastening portion 11 and the apex 231 of the second peak 23. Meanwhile, a distance C between an end of the second fastening portion 13 and a bottom 151 of the first folding portion 15 may be greater than a distance D between an end of the second fastening portion 13 and the bottom 171 of the second folding portion 17. In addition, a portion 153 connecting the first folding portion 15 and the first peak 21 may form an angle between 10 and 25 degrees with respect to the axial direction XL. A distance E between a line parallel to the axial direction XL while passing the apex 211 of the first peak 21 and an outer circumferential surface of the first fastening portion 11 may be 20 to 50% of a distance F between a line parallel to the axial direction XL while passing the bottom 171 of the second folding portion 17 and an outer circumferential surface of the first fastening portion 11.

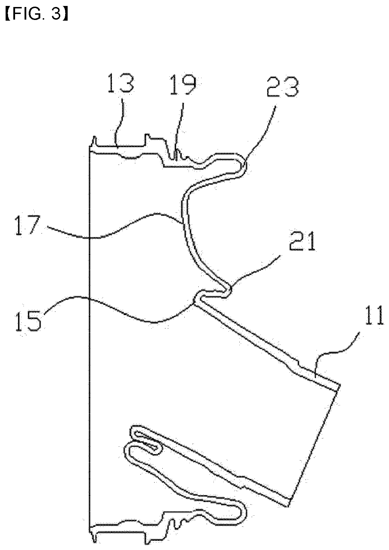

FIG. 3 is a view showing the shape of the rolling boot according to the embodiment of the present invention in a state of being bent, and as shown in FIG. 3, in the rolling boot according to the embodiment of the present invention, since tensile regions are divided in the first and second folding portions 15 and 17, there is no excessive deformation, and the support portion 19 can effectively support the tension and compression of the first and second folding portions 15 and 17.

Although preferred embodiments of the present invention have been described in detail above, the scope of the present invention is not limited thereto, and various modifications and improvements by those skilled in the art using the basic concept of the present invention as defined in the following claims are also within the scope of the invention.

### [Industrial Applicability]

Since the present invention relates to a boot applicable to a constant velocity joint used in vehicles, the present invention has an industrial applicability.

## Claims

1. A rolling boot used in a constant velocity joint comprising:
a first fastening portion that is configured to be fastened to a joint shaft of the constant velocity joint;
a second fastening portion that is configured to be fastened to a joint case of the constant velocity joint;
a first folding portion that is configured to be folded when the constant velocity joint is articulated;
a second folding portion that is configured to be folded when the constant velocity joint is articulated and is disposed radially outside the first folding portion;
a support portion that is configured to support tensile and compression when the first folding portion and the second folding portion are folded;
a first peak connecting the first fooling portion and the second folding portion; and
a second peak connecting the second folding portion and the support portion.

2. The rolling boot of claim 1, wherein the first peak and the second peak are respectively convexly formed toward the first fastening portion in a direction parallel to an axial direction of the joint shaft.

3. The rolling boot of claim 1, wherein tangent lines at apexes of the first peak and the second peak are respectively perpendicular to an axial direction of the joint shaft.

4. The rolling boot of claim 1, wherein a distance between a tip of the first fastening portion and an apex of the first peak is less than or equal to a distance between a tip of the first fastening portion and an apex of the second peak.

5. The rolling boot of claim 1, wherein a distance between an end of the second fastening portion and a bottom of the first folding portion is greater than a distance between an end of the second fastening portion and a bottom of the second folding portion.

6. The rolling boot of claim 1, wherein a portion connecting the first folding portion and the first peak form an angle between 10 to 25 degrees with respect to an axial direction of the joint shaft.

7. The rolling boot of claim 1, wherein a distance between a line parallel to an axial direction of the joint shaft while passing an apex of the first peak and an outer circumferential surface of the first fastening portion is 20 to 50% of a distance between a line parallel to the axial direction of the joint shaft while passing a bottom of the second folding portion and an outer circumferential surface of the first fastening portion.
